(19) Europäisches Patentamt
European Patent Office
Office européen des brevets

(11) EP 3 321 716 A1

(12) EUROPÄISCHE PATENTANMELDUNG

(43) Veröffentlichungstag:
16.05.2018 Patentblatt 2018/20

(51) Int Cl.:
G01V 5/00 (2006.01)    H05H 9/04 (2006.01)

(21) Anmeldenummer: 17194212.1

(22) Anmeldetag: 29.09.2017

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD

(30) Priorität: 15.11.2016 DE 102016222373

(71) Anmelder: Siemens Healthcare GmbH
91052 Erlangen (DE)

(72) Erfinder:
• MÜLLER, Sven
  99198 Urbich (DE)
• KOSCHMIEDER, Martin
  07407 Uhlstädt-Kirchhasel (DE)
• MÖLLER, Marvin
  07751 Jena (DE)
• WILLING, Stefan
  07407 Rudolstadt (DE)

(54) **VERFAHREN ZUM BETRIEB EINES LINEARBESCHLEUNIGERS UND LINEARBESCHLEUNIGER**

(57) Bei einem Verfahren zum Betrieb eines Linearbeschleunigers (1) werden geladene Teilchen von einer Teilchenquelle (2) emittiert und in einer Beschleunigungsvorrichtung (3) mittels eines hochfrequenten Wechselfelds derart beschleunigt, dass Pulse von geladenen Teilchen erzeugt werden. Der Beschleunigungsvorrichtung (3) wird zur Erzeugung des hochfrequenten Wechselfelds eine Hochfrequenzleistung ($P_{HF}$) periodisch mittels Hochfrequenzpulse zugeführt. Gemäß der Erfindung wird ein von der Teilchenquelle (2) emittierter Teilchenstrom innerhalb einer HF-Pulsdauer ($\Delta t$) des Hochfrequenzpulses derart variiert, dass der innerhalb der HF-Pulsdauer ($\Delta t$) geformte Puls zumindest zwei Teilpulse mit unterschiedlichen mittleren Energien pro Teilchen aufweist. Die Erfindung betrifft ferner einen Linearbeschleuniger, der zur Durchführung des Verfahrens ausgebildet ist und eine Einrichtung der materialdiskriminierenden Radioskopie mit einem derartigen Linearbeschleuniger.

FIG 2

**Beschreibung**

Die Erfindung betrifft ein Verfahren zum Betrieb eines Linearbeschleunigers, wobei geladene Teilchen von einer Teilchenquelle emittiert werden und in einer Beschleunigungsvorrichtung mittels eines periodisch anliegenden, hochfrequenten Wechselfelds derart beschleunigt werden, dass Pulse von geladenen Teilchen, insbesondere im MeV Bereich erzeugt werden.

Es ist bekannt Linearbeschleuniger, insbesondere Linearbeschleuniger für Elektronen zur Erzeugung von Röntgenstrahlung im MeV Bereich beispielsweise im Bereich der Strahlentherapie einzusetzen. Ein anderes Anwendungsfeld betrifft die zerstörungsfreie Werkstoffprüfung bzw. die Durchleuchtung von Objekten insbesondere im Rahmen einer Sicherheitsüberprüfung. Im letzteren Fall sind zur Durchleuchtung von großen Objekten, wie beispielsweise Gütercontainer für Eisenbahnwägen Durchleuchtungssysteme bekannt, bei denen zur Erzeugung von Photonen im MeV-Bereich Linearbeschleuniger eingesetzt werden. Die bei der Durchstrahlung des Objekts abgeschwächte Röntgenstrahlung wird räumlich aufgelöst von einem Röntgendetektor detektiert, der für gewöhnlich als Zeilendetektor ausgebildet ist. Das radioskopische Bild des Objekts wird somit zeilenweise aufgenommen, während das Objekt am Röntgendetektor vorbei geführt wird.

In jüngerer Zeit wurde beispielsweise von S. Ogorodnikov und V. Petrunin in Physical Review Special Topics - Accelerators and Beams, Vol. 5, 104701 (2002) oder in US 8183801 B2 vorgeschlagen, zur Materialdiskriminierung Teilchenpulse mit unterschiedlichen Energien, beispielsweise mit mittleren Energien pro Teilchen von 4MeV und 8MeV einzusetzen. Der Zeitversatz der aufeinanderfolgenden Pulsereignisse ist von der Pulswiederholungsrate des Linearbeschleunigers vorgegeben und liegt im Bereich von mehreren Millisekunden. Aus den nacheinander detektierten Durchleuchtungsdaten können unter Berücksichtigung des zu Linien unterschiedlicher Energie korrespondierenden Intensitätsverhältnisses Bilddaten mit Materialinformation abgeleitet werden. Da die Erfassung der nieder- und hochenergetischen Strahlung zeitlich versetzt erfolgt, werden in den Bilddaten Artefakte erzeugt, wenn der Röntgendetektor und das Objekt relativ zueinander während der Erfassung bewegt werden. In praktischen Anwendungen werden beispielsweise Gütercontainer oder Güterwagons von fahrenden Zügen durchleuchtet, so dass ein Messversatz entsteht, der typischerweise im Bereich von mehreren Zentimetern entsteht.

Ein in US 5524133 A verfolgter Ansatz, das vorstehend genannte Problem zu umgehen, besteht darin, mehrere Detektoren in Reihen nebeneinander anzuordnen, wobei jeweils eine Reihe von Detektoren einen bestimmten spektralen Anteil einer Strahlquelle mit festem Energiespektrum erfasst. Die Selektion des spektralen Anteils erfolgt beispielsweise durch eine entsprechende Vorfilterung. Dieses Vorgehen ist allerdings sehr aufwendig, da die Anzahl der benötigten Detektoren deutlich erhöht ist.

Ein weiterer Ansatz wird von US 2014/0270086 A1 beschritten. Hierbei wird vorgeschlagen, den Elektroneneinschuss in eine Beschleunigungsvorrichtung des Linearbeschleunigers zu synchronisieren. Die Energie des Elektronenstrahls kann dann dadurch variiert werden, dass der Einschuss relativ zur Phase des innerhalb von Hohlraumresonatoren der Beschleunigungsvorrichtung vorherrschenden hochfrequenten Wechselfelds verschoben wird. Auch hier ist der Aufwand deutlich erhöht, da der Linearbeschleuniger mit einer separaten Buncher-Sektion versehen werden muss, für die eine separate Hochfrequenz-Verstärkerstufe benötigt wird.

Es ist Aufgabe der Erfindung, ein Verfahren und eine Vorrichtung anzugeben, welche dazu geeignet sind, die Erfassung von materialdiskriminierenden radioskopischen Bildern hoher Güte sicherzustellen.

Diese Aufgabe wird gelöst durch ein Verfahren zum Betrieb eines Linearbeschleunigers nach Anspruch 1, einen Linearbeschleuniger nach Anspruch 8 und eine Einrichtung der materialdiskriminierenden Radioskopie nach Anspruch 10.

Vorteilhafte Weiterbildungen der Erfindung sind Gegenstand der Unteransprüche.

Bei einem Verfahren zum Betrieb eines Linearbeschleunigers, werden geladene Teilchen von einer Teilchenquelle emittiert und in einer Beschleunigungsvorrichtung mittels eines hochfrequenten Wechselfelds derart beschleunigt, dass Pulse von geladenen Teilchen erzeugt werden. Der Beschleunigungsvorrichtung wird zur Erzeugung des hochfrequenten Wechselfelds eine Hochfrequenzleistung periodisch mittels Hochfrequenzpulsen zugeführt. Gemäß der Erfindung wird ein von der Teilchenquelle emittierter Teilchenstrom innerhalb einer HF-Pulsdauer des Hochfrequenzpulses derart variiert, dass der innerhalb der HF-Pulsdauer geformte Puls zumindest zwei Teilpulse mit unterschiedlichen mittleren Energien pro Teilchen aufweist.

Die Erfindung schlägt somit vor, innerhalb der HF-Pulsdauer des Hochfrequenzpulses zumindest zwei Teilpulse mit unterschiedlichen mittleren Energien zu realisieren. Die HF-Pulsdauer des Hochfrequenzpulses liegt typischerweise im Bereich von einigen wenigen Mikrosekunden. Bekannte Verfahren beruhen auf einer Erfassung von Pulsen geladener Teilchen, denen aufeinanderfolgende Hochfrequenzpulse zugeordnet sind. Der zeitliche Abstand dieser Pulse geladener Teilchen ist somit von der Wiederholungsrate der Hochfrequenzpulse vorgegeben und beträgt typischerweise einige wenige Millisekunden. Mit anderen Worten kann der Messversatz um einen Faktor von etwa 1000 verringert werden, wenn Ereignisse ausgelesen werden, die zu innerhalb der HF-Pulsdauer des Hochfrequenzpulses generierten Teilpulsen korrespondieren.

Die Erfindung beruht weiter auf der Beobachtung, dass die mittlere Energie der mittels des Linearbeschleunigers beschleunigten Teilchen von dem Teilchenstrom abhängt, der von der Teilchenquelle emittiert wird und somit in die Beschleunigungsvorrichtung injiziert oder "eingeschossen" wird. In diesem Zusammenhang wird auch von einem "Injektionsstrom" gesprochen. Es ist daher möglich, beispielsweise zwei Teilpulse dadurch zu generieren, dass innerhalb der HF-Pulsdauer des Hochfrequenzpulses zwei Einschussströme in die Beschleunigungsvorrichtung injiziert werden.

Um zu realisieren, dass die in den Teilpulsen enthaltenen Teilchen unterschiedliche mittlere Energien aufweisen, kann somit zum einen insbesondere die Stromstärke des emittierten Teilchenstroms, welche unter anderem auch als Strahlstromstärke oder Strahlast bezeichnet wird, angepasst werden. Zudem kann die Fähigkeit der Beschleunigungsvorrichtung ausgenutzt werden, Energie zu speichern. Da die Beschleunigungsvorrichtung des Linearbeschleunigers eine Resonatorstruktur aufweist, steht typischerweise bei der Zufuhr der Hochfrequenzleistung anfänglich (Füllzeit), also während einer Einschwingphase, noch nicht die vollständige Beschleunigungsspannung zur Verfügung. Entsprechend nimmt die in der Resonatorstruktur gespeicherte Energie typischerweise exponentiell ab, wenn die Zufuhr der Hochfrequenzleistung am Ende des Hochfrequenzpulses unterbrochen wird. Die mittlere Energie der in den jeweiligen Teilpulsen enthaltenen Teilchen kann daher zusätzlich durch eine Variation des Zeitpunkts, an dem der Teilchenstrom in die Beschleunigungsvorrichtung eingebracht oder "eingeschossen" wird, angepasst werden. Dies ermöglicht insbesondere eine flexible Anpassung einer mittels der Teilpulse erzeugten Röntgenstrahlung hinsichtlich ihrer Photonenenergie bzw. der durch die Röntgenstrahlung vermittelten Dosis.

Bevorzugt wird die Stromstärke des in die Beschleunigungsvorrichtung eingebrachten Teilchenstroms -also die Stahllast- in Abhängigkeit des Zeitpunkts des Einbringens derart gewählt, dass die von den zumindest zwei Teilpulsen vermittelte Dosis konstant ist und die Energiedifferenz der beiden Teilpulse maximal ist.

Mit der Erfindung werden somit mehrere Vorteile erzielt. Zum einen sind die zumindest zwei Pulsereignisse bzw. Teilpulse, auf denen eine Erfassung eines radioskopischen Bildes mit Materialdiskriminierung basieren kann, typischerweise lediglich um Mikrosekunden versetzt. Dies ermöglicht eine Reduktion von Bildartefakten bei einer Messung von schnell bewegten Objekten. Zum anderen ist eine schnellere Bildakquisition möglich, die um die Anzahl der innerhalb der HF-Pulsdauer des Hochfrequenzpulses erzeugten Teilpulse erhöht ist. Die Akquisitionsrate entspricht einer Detektoranordnung mit einer entsprechend erhöhten Anzahl von Röntgendetektoren, so sind beispielsweise bei zwei Teilpulsen pro Hochfrequenzpuls zwei zeitsynchrone Bilderfassungen bei unterschiedlichen mittleren Energien mit nur einem Röntgendetektor möglich. Eine Erhöhung der die Bildwiederholungsrate typischerweise limitierenden mittleren Hochfrequenzleistung ist hierzu ebenfalls nicht notwendig.

Bevorzugt handelt es sich bei den geladenen Teilchen um Elektronen.

Besonders bevorzugt werden zumindest zwei zeitlich um etwa 1µs bis 3µs versetzte Teilpulse dadurch erzeugt, dass die Stromstärke des Teilchenstroms innerhalb der HF-Pulsdauer des Hochfrequenzpulses verändert wird. Bei der Erfassung von bewegten Objekten, die sich relativ zum Linearbeschleuniger mit einer Relativgeschwindigkeit von etwa 60 Kilometer pro Stunde bewegen, ergibt sich ein Messversatz, der im Bereich von etwa 15µm bis 50µm liegt. Dies ermöglicht insbesondere die Erfassung von radioskopischen Durchleuchtungsbildern mit Materialinformation an fahrenden Zügen.

Die HF-Pulsdauer des Hochfrequenzpulses beträgt in bevorzugten Ausführungsbeispielen zwischen 2µs und 10µs.

Die mittlere Energie pro Teilchen, welche zur Photonenenergie der durch die Teilpulse erzeugten Röntgenstrahlung korrespondiert, liegt vorzugsweise im Bereich von mehr als 1MeV und weniger als 20MeV. Mit anderen Worten werden vorzugsweise Teilchenpulse generiert, mit denen Brems- bzw. Röntgenstrahlung in einem Spektralbereich erzeugt werden kann, der zum Durchleuchten von massiven Behältnissen, wie insbesondere den im Warenverkehr gängigen Gütercontainern oder Eisenbahnwägen geeignet ist.

Vorzugsweise wird ein Teilchenstrom zur Erzeugung eines der zumindest zwei Teilpulse während einer Einschwingphase in die Beschleunigungsvorrichtung injiziert. Während der Einschwingphase steht noch nicht die vollständige Beschleunigungsspannung zur Verfügung, wobei diese nochmals durch den eingebrachten Teilchenstrom reduziert wird. Es kann somit ein Teilpuls mit geringer mittlerer Energie pro Teilchen erzeugt werden, indem der Teilchenstrom zu einem Zeitpunkt eingebracht wird, bevor die Beschleunigungsspannung ihren Sättigungswert erreicht hat.

Besonders bevorzugt wird der die zumindest zwei Teilpulse enthaltende Puls geladener Teilchen zur Erzeugung von Röntgenstrahlung, insbesondere zur Erzeugung von Röntgenstrahlung für die Radioskopie, also der Erzeugung von Durchleuchtungsbildern, verwendet. Andere Anwendungsfelder betreffen beispielsweise die Strahlentherapie oder die Computertomographie. Hierbei ist die Materialdiskriminierung eine zusätzliche Information, welche direkt in einem Messvorgang akquiriert werden kann. Es wird somit vermieden, mehrere Messungen mit unterschiedlichen Energiespektren durchführen zu müssen, um eine Information über die Materialzusammensetzung des durchleuchteten Objekts zu erhalten.

Besonders bevorzugte Ausführungsbeispiele betreffen die Erfassung von materialdiskriminierenden radioskopischen Bildern von Objekten. Hierzu wird der Puls geladener Teilchen abgebremst, um Röntgenstrahlung unterschiedlicher spektraler Zusammensetzung bereitzustellen. Die materialdiskriminierenden radioskopischen Bilder werden mittels eines Röntgendetektors generiert, der die Röntgenstrahlung nach Durchstrahlung des Objekts erfasst.

Besonders bevorzugt ist der Röntgendetektor als Zeilendetektor ausgebildet, d. h. der Röntgendetektor umfasst eine Vielzahl von nebeneinander angeordneten Einzeldetektoren, so dass eine simultane Erfassung von Röntgenstrahlung entlang der von der linearen Anordnung von Einzeldetektoren vorgegebenen Richtung ermöglicht ist. Eine derartige Ausbildung ist insbesondere bei der Durchleuchtung von großen Objekten zu bevorzugen.

Vorzugsweise bewegen sich das Objekt und der Röntgendetektor während der Erfassung der radioskopischen Bilder relativ zueinander. Bei der vorstehend genannten Ausbildung als Zeilendetektor bewegt sich das Objekt weiter bevorzugt in einer senkrecht zur linearen Anordnung von Einzeldetektoren verlaufenden Richtung. Durch den geringen zeitlichen Versatz der im Puls enthaltenen Teilpulse können Bildartefakte bei der Erfassung von bewegten Objekten weitestgehend vermieden werden.

Die eingangs genannte Aufgabe wird ferner gelöst durch einen Linearbeschleuniger, der dazu ausgebildet ist, mit dem vorstehend beschriebenen Verfahren betrieben zu werden. Die damit verknüpften technischen Vorteile ergeben sich unmittelbar aus der bisherigen Beschreibung, so dass zunächst hierauf verwiesen wird, um Wiederholungen zu vermeiden.

Der Linearbeschleuniger umfasst eine einen Teilchenstrom emittierende Teilchenquelle und eine Beschleunigungsvorrichtung mit mehreren miteinander gekoppelten Hohlraumresonatoren. Der Beschleunigungsvorrichtung ist zur Erzeugung eines hochfrequenten Wechselfelds eine Hochfrequenzleistung mittels Hochfrequenzpulsen periodisch zuführbar, die eine HF-Pulsdauer aufweisen. Gemäß der Erfindung ist eine Steuerungseinrichtung dazu ausgebildet, einen von der Teilchenquelle emittierten Teilchenstrom innerhalb einer HF-Pulsdauer des Hochfrequenzpulses derart zu variieren, dass der innerhalb der HF-Pulsdauer geformte Puls zumindest zwei Teilpulse mit unterschiedlichen mittleren Energien pro Teilchen aufweist.

Auf Basis der zumindest zwei Pulsereignisse bzw. Teilpulse, kann eine Erfassung eines radioskopischen Bildes mit Materialdiskriminierung erfolgen. Da diese Ereignisse lediglich um wenige Mikrosekunden zeitlich versetzt sind, können Bildartefakte insbesondere bei der Erfassung von bewegten Objekten weitestgehend eliminiert werden.

Der derartig ausgebildete Linearbeschleuniger ermöglicht ferner eine schnellere Bildakquisition, da nunmehr innerhalb der HF-Pulsdauer des Hochfrequenzpulses mehrere Teilpulse zur Verfügung stehen, die zur Erzeugung von Röntgenstrahlung in einer bildgebenden Einrichtung verwendet werden können. Hierzu ist maßgeblich eine Modifizierung der den Teilchenstrom einspeisenden Teilchenquelle bzw. deren Ansteuerung notwendig, was durch eine Anpassung der entsprechenden Elektronikkomponenten der Steuerungseinrichtung möglich ist.

Die eingangs genannte Aufgabe wird ferner gelöst durch eine Einrichtung der materialdiskriminierenden Radioskopie mit einem derartig ausgebildeten Linearbeschleuniger.

Die Einrichtung der materialdiskriminierenden Radioskopie umfasst einen Röntgenstrahlemitter, einen Röntgenstrahldetektor und eine Auswerteeinrichtung zur Erzeugung von radioskopischen Bildern aus den mittels des Röntgendetektors erfassten Daten. Hierbei ist ein zu durchleuchtendes Objekt in einem Zwischenbereich zwischen Röntgenemitter und Röntgendetektor einzubringen. Gemäß der Erfindung weist der Röntgenemitter den vorstehend beschriebenen Linearbeschleuniger auf, welcher dazu ausgebildet ist, ein Target mit Pulsen geladener Teilchen zu beaufschlagen, um so Bremsstrahlung in Spektralbereichen zu erzeugen, die zu den mittleren Energien der in den Teilpulsen enthaltenen Teilchen korrespondieren.

Die Einrichtung der materialdiskriminierenden Radioskopie eignet sich beispielsweise für Sicherheitsüberprüfungen insbesondere von Gepäck. Besonders bevorzugt wird die Einrichtung zur Überprüfung des Warenverkehrs eingesetzt. Die Einrichtung ist vorzugsweise dazu ausgebildet, große Objekte wie Schiffscontainer zu durchleuchten und umfasst hierzu in einer möglichen Ausgestaltung der Erfindung einen als Zeilendetektor ausgebildeten Röntgendetektor.

Für eine weitere Beschreibung der Erfindung wird auf das in den Zeichnungsfiguren gezeigte Ausführungsbeispiel verwiesen. Es zeigen in einer schematischen Darstellung:

Fig. 1:     den schematischen Aufbau einer Einrichtung der materialdiskriminierenden Radioskopie mit einem Linearbeschleuniger;

Fig. 2:     den Ablauf eines Verfahrens zum Betrieb des Linearbeschleunigers;

Fig. 3:     die Beschleunigungsspannung als Funktion der Zeit bei einem Ausführungsbeispiel mit acht gekoppelten Hohlraumresonatoren;

Fig.4:      die Beschleunigungsspannung als Funktion der Zeit bei einem weiteren Ausführungsbeispiel mit 22 gekoppelten Hohlraumresonatoren;

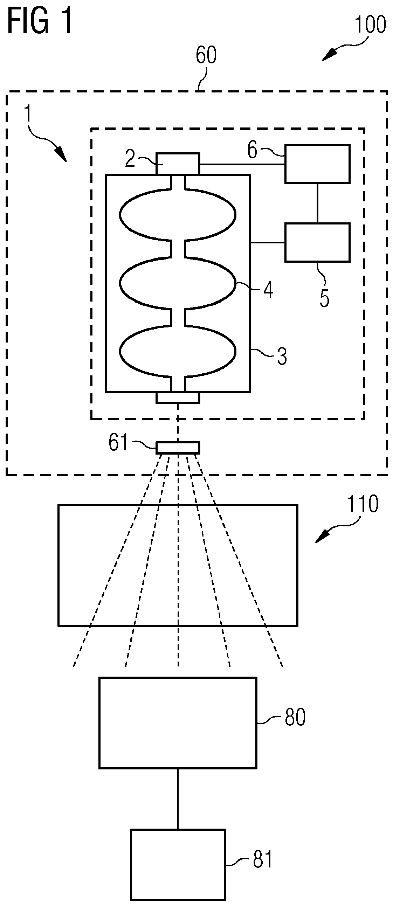

Figur 1 zeigt schematisch den Aufbau einer bildgebenden Einrichtung 100 der materialdiskriminierenden Radioskopie. Die Einrichtung 100 ist dazu ausgebildet, radioskopische Durchleuchtungsbilder von großen Objekten 110, wie insbesondere Gütercontainern zu erfassen und weist hierzu einen Röntgenemitter 60 und einen Röntgendetektor 80 auf. Das zu durchleuchtende Objekt 110 ist im Zwischenbereich zwischen dem Röntgenemitter 60 und Röntgendetektor 80 angeordnet. Der Röntgendetektor 80, der beispielsweise als Zeilendetektor ausgebildet ist, detektiert die beim Durchgang durch das Objekt 110 abgeschwächte Röntgenstrahlung. Eine Auswerteeinrichtung 81 generiert in an sich bekannter Art und Weise ein radioskopisches Bild auf Grundlage der erfassten Schwächungsdaten.

Die Einrichtung 100 ist dazu ausgebildet, Informationen über die Materialzusammensetzung des durchleuchteten Objekts zu liefern. Der Röntgenemitter 60 emittiert hierzu zeitversetzt Photonen unterschiedlicher Energie. Aus dem vom Röntgendetektor 80 erfassten Intensitätsverhältnis der zu den unterschiedlichen Strahlungsenergien $E_{ph}$ korrespondierenden Schwächungsdaten können Rückschlüsse über das durchstrahlte Objekt getroffen werden. Die Strahlungsenergie $E_{ph}$ pro emittiertes Photon beträgt beispielsweise in etwa 4MeV und in etwa 8MeV.

Der Röntgenemitter 60 weist hierzu ein Target 61 auf, das von Pulsen geladener Teilchen beaufschlagt wird, so dass Bremsstrahlung mit den benötigten spektralen Anteilen entsteht. Der Puls geladener Teilchen -im vorliegenden Fall sind dies Elektronen- ist mittels des Linearbeschleunigers 1 erzeugbar, welcher eine Teilchenquelle 2 und eine Beschleunigungsvorrichtung 3 mit mehreren gekoppelten Hohlraumresonatoren 4 umfasst. Eine Energieversorgung 5 versorgt die Beschleunigungsvorrichtung 3 mit einer Hochfrequenzleistung $P_{HF}$, um innerhalb der gekoppelten Hohlraumresonatoren 4 ein hochfrequentes Wechselfeld zur Beschleunigung eines Teilchenstroms zu erzeugen, welcher von der Teilchenquelle 2 in die Beschleunigungsvorrichtung zu vorgegebenen Zeitpunkten eingeschossen bzw. injiziert wird.

Die Zufuhr der Hochfrequenzleistung $P_{HF}$ erfolgt periodisch, d. h. in Form von der Beschleunigungsvorrichtung 3 zugeführten Hochfrequenzpulsen, die eine HF-Pulsdauer $\Delta t$ aufweisen. Eine Steuerungseinrichtung 6 ist sowohl mit der Teilchenquelle 2 als auch der Energieversorgung 5 verbunden und dazu ausgebildet, das Einkoppeln oder "Einschießen" des Teilchenstroms in die Beschleunigungsvorrichtung 3 hinsichtlich der periodisch zugeführten Hochfrequenzleistung $P_{HF}$ zeitlich zu synchronisieren. Die Steuerungseinrichtung 6 und die Teilchenquelle 2 sind insbesondere dazu ausgebildet während der HF-Pulsdauer $\Delta t$, die typischerweise im Bereich von einigen wenigen Mikrosekunden liegt, zumindest zwei Teilchenströme mit unterschiedlichen Stromstärken I in die Beschleunigungsvorrichtung 3 einzubringen.

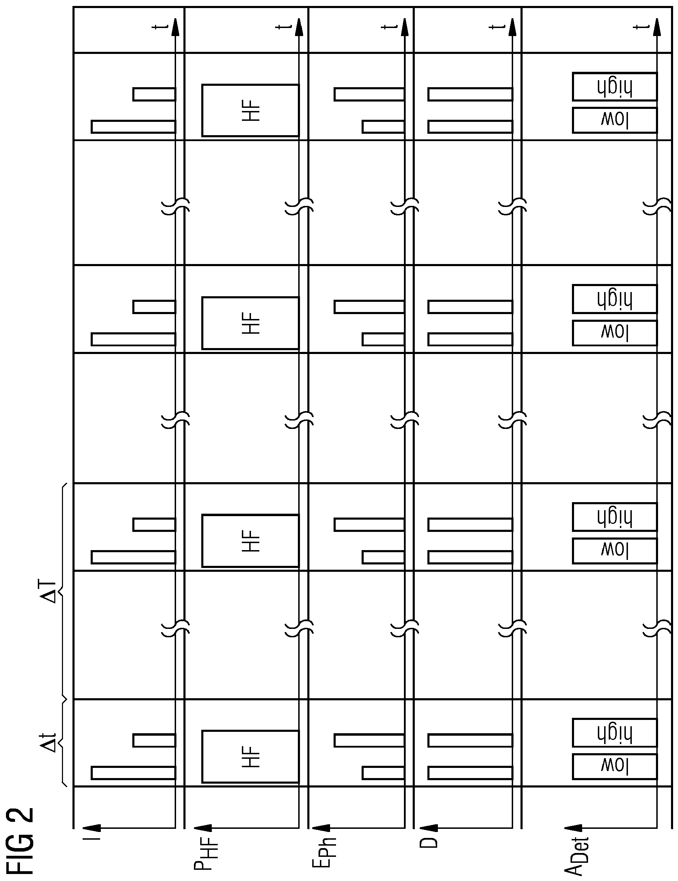

Figur 2 illustriert das Verfahren zum Betrieb des Linearbeschleunigers 1 schematisch anhand von mehreren Funktionsgraphen, die verschiedene physikalische Größen bzw. Betriebsparameter in Abhängigkeit der Zeit t zeigen.

Der der Beschleunigungsvorrichtung 3 zugeführte Hochfrequenzpuls weist eine HF-Pulsdauer $\Delta t$ auf, die zwischen 3 und 5$\mu$s beträgt. Die Periodendauer $\Delta T$

liegt im Bereich von Millisekunden, in dem exemplarisch dargestellten Beispiel sind dies 2 bis 3ms.

Innerhalb des von der HF-Pulsdauer $\Delta t$ vorgegebenen Zeitfensters werden zwei Teilpulse geladener Teilchen dadurch erzeugt, dass zwei Teilchenströme mit unterschiedlichen Stromstärken I in die Beschleunigungsvorrichtung 3 injiziert werden. Da in einer Einschwingphase zu Beginn des Hochfrequenzpulses noch nicht die maximale Beschleunigungsspannung des eingeschwungenen Zustands in der von den gekoppelten Hohlraumresonatoren 4 gebildeten Resonatorstruktur zur Verfügung steht, haben die im ersten Teilpuls enthaltenen Teilchen eine geringere mittlere Energie. Entsprechend weist die davon erzeugte Röntgenstrahlung eine geringere Strahlenenergie $E_{ph}$ pro Photon auf.

Die Stromstärken I der beiden innerhalb der HF-Pulsdauer $\Delta t$ injizierten Teilchenströme sind so gewählt, dass die deponierte Dosis D für beide Teilpulse gleich groß ist. Die Detektorauslesung $A_{Det}$ des nieder- bzw. hochenergetischen Teilpulses erfolgt entsprechend um etwa 1 bis 2$\mu$s zeitversetzt.

Die Umsetzung von zumindest zwei Teilpulsen mit unterschiedlichen mittleren Energien pro Teilchen innerhalb der HF-Pulsdauer $\Delta t$ eines Hochfrequenzpulses beruht auf der Eigenschaft der Beschleunigervorrichtung, Energie zu speichern. Die Änderung der Energie $W_B$ in der Resonatorstruktur der Beschleunigungsvorrichtung 3 ist gegeben durch

$$\frac{dW_B}{dt} = P_{HF} - P_{Ohm} - P_{Strahl} \, ,$$

wobei $P_{Ohm}$ die ohmschen Verluste der Stehwelle in der Beschleunigervorrichtung 3 und $P_{Strahl}$ die Strahlverluste sind. Die Beschleunigungsspannung U ergibt sich aus der in der Resonatorstruktur gespeicherten Energie $W_B$ gemäß

$$W_B = \frac{1}{2} C_B U^2 .$$

Die Kapazität $C_B$ der Beschleunigungsvorrichtung 3 ist hierbei der Koppelfaktor zwischen dem Quadrat der Beschleunigungsspannung U und der gespeicherten Energie $W_B$. Für die Gesamtkapazität $C_B$ der Beschleunigungsvorrichtung 3 gilt näherungsweise

$$C_B = \frac{C_{1Zelle}}{N} \, ,$$

wobei $C_{1Zelle}$ die Kapazität eines Hohlraumresonators 4 bezeichnet.

Die ohmschen Verluste $P_{Ohm} = \frac{U^2}{R_S}$ werden

durch den Shunt-Wiederstand $R_s$ beschrieben. Der Shunt-Wiederstand $R_{s\ 1Zelle}$ einer Beschleunigungsvorrichtung 3 mit N gekoppelten Hohlraumresonatoren 4 beträgt

$$R_S = N \cdot R_{S1Zelle} \cdot$$

Die Strahlverluste $P_{Strahl}$ sind vom Produkt der Beschleunigungsspannung U und der Stromstärke I gegeben.

Mit diesen Annahmen lässt sich zeigen, dass die Beschleunigungsspannung U proportional zur Wurzel aus der Anzahl N von gekoppelten Hohlraumresonatoren ist. Ferner nimmt die Abhängigkeit der Beschleunigungsspannung U von der Stromstärke I mit steigendem N zu, da der Shunt-Widerstand kleiner wird.

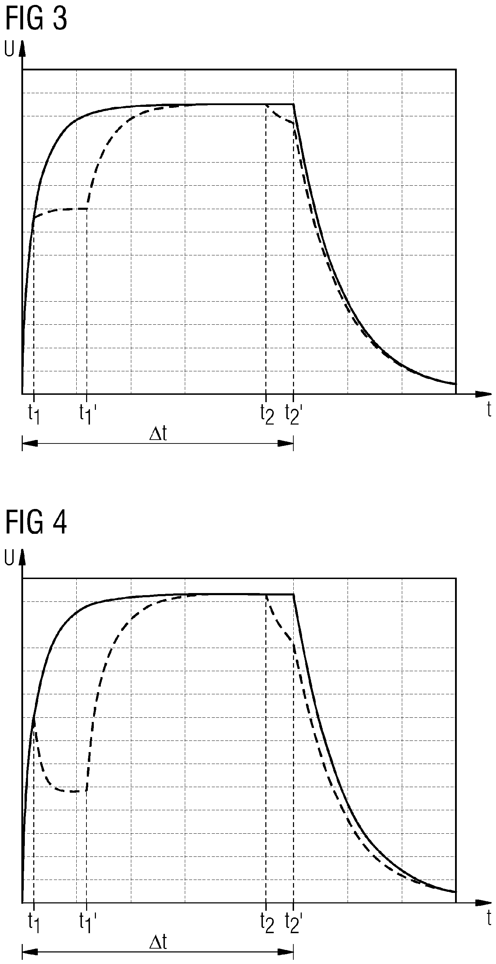

Figuren 3 und 4 zeigen Simulationsergebnisse für Beschleunigungsvorrichtungen 3, welche 8 (Figur 3) bzw. 22 gekoppelte Hohlraumresonatoren 4 (Figur 4) aufweisen. Der Verlauf der Beschleunigungsspannung U in Abhängigkeit der Zeit t ohne injizierten Teilchenstrom ist in beiden Fällen durch die durchgezogene Linie gegeben. Der Verlauf der Beschleunigungsspannung U in Abhängigkeit der Zeit t mit eingekoppelten Teilchenströmen ist durch die gestrichelte Linie gegeben. In beiden Fällen wird jeweils ein Teilchenstrom zum Zeitpunkt $t_1$ bzw. $t_2$ in die Beschleunigungsvorrichtung 3 injiziert, der zum Zeitpunkt $t_1'$ bzw. $t_2'$ wieder abgeschaltet wird. Die Simulationsergebnisse zeigen in beiden Fällen, dass weniger Beschleunigungsspannung U anliegt, wenn in den Hohlraumresonatoren 4 ein Teilchenstrom eingebracht wird.

Der Zeitpunkt $t_1$ ist ferner so gewählt, dass dieser innerhalb einer Einschwingphase der von den Hohlraumresonatoren 4 gebildeten Resonatorstruktur liegt. Mit anderen Worten hat die Beschleunigungsspannung U zu diesem Zeitpunkt t1 noch nicht ihren Sättigungswert erreicht, so dass die im ersten Teilpuls enthaltenen Teilchen einen geringeren Zuwachs an kinetischer Energie erfahren.

Obwohl die Erfindung im Detail mit Bezug auf das bevorzugte Ausführungsbeispiel näher illustriert und beschrieben wurde, so ist die Erfindung nicht hierdurch eingeschränkt. Andere Variationen und Kombinationen können vom Fachmann hieraus abgeleitet werden, ohne vom wesentlichen Gedanken der Erfindung abzuweichen.

## Patentansprüche

1. Verfahren zum Betrieb eines Linearbeschleunigers (1), wobei geladene Teilchen von einer Teilchenquelle (2) emittiert werden und in einer Beschleunigungsvorrichtung (3) mittels eines hochfrequenten Wechselfelds derart beschleunigt werden, dass Pulse von geladenen Teilchen erzeugt werden, wobei der Beschleunigungsvorrichtung (3) zur Erzeugung des hochfrequenten Wechselfelds eine Hochfrequenzleistung periodisch mittels Hochfrequenzpulse zugeführt wird,
**dadurch gekennzeichnet, dass** ein von der Teilchenquelle (2) emittierter Teilchenstrom innerhalb einer HF-Pulsdauer ($\Delta$t) des Hochfrequenzpulses derart variiert wird, dass der innerhalb der HF-Pulsdauer ($\Delta$t) geformte Puls zumindest zwei Teilpulse mit unterschiedlichen mittleren Energien pro Teilchen aufweist.

2. Verfahren nach Anspruch 1,
**dadurch gekennzeichnet, dass** zumindest zwei zeitlich um etwa 1$\mu$s bis 3$\mu$s versetzte Teilpulse dadurch erzeugt werden, dass eine Stromstärke (I) des Teilchenstroms innerhalb der HF-Pulsdauer ($\Delta$t) des Hochfrequenzpulses verändert wird.

3. Verfahren nach Anspruch 1 oder 2,
**dadurch gekennzeichnet, dass** die HF-Pulsdauer ($\Delta$t) des Hochfrequenzpulses zwischen 2$\mu$s und 10$\mu$s beträgt.

4. Verfahren nach einem der vorhergehenden Ansprüche,
**dadurch gekennzeichnet, dass** die mittlere Energie pro Teilchen im Bereich von mehr als 1MeV und weniger als 20MeV liegt.

5. Verfahren nach einem der vorhergehenden Ansprüche,
**dadurch gekennzeichnet, dass** ein Teilchenstrom zur Erzeugung eines der zumindest zwei Teilpulse während einer Einschwingphase in die Beschleunigungsvorrichtung (3) injiziert wird.

6. Verfahren nach einem der vorhergehenden Ansprüche,
**dadurch gekennzeichnet, dass** der die zumindest zwei Teilpulse enthaltende Puls geladener Teilchen zur Erzeugung von Röntgenstrahlung verwendet wird.

7. Verfahren nach Anspruch 6,
**dadurch gekennzeichnet, dass** materialdiskriminierende radioskopische Bilder eines Objekts (110) mittels eines die Röntgenstrahlung erfassenden Röntgendetektors generiert werden.

8. Verfahren nach Anspruch 7,
**dadurch gekennzeichnet, dass** sich das Objekt (110) und der Röntgendetektor (80) während der Erfassung der radioskopischen Bilder relativ zueinander bewegen.

9. Linearbeschleuniger (1) mit einer einen Teilchenstrom emittierenden Teilchenquelle (2) und einer mehrere miteinander gekoppelte Hohlraumresonatoren (4) umfassenden Beschleunigungsvorrichtung (3), welcher zur Erzeugung eines hochfrequenten Wechselfelds eine Hochfrequenzleistung mittels eine HF-Pulsdauer ($\Delta t$) aufweisenden Hochfrequenzpulsen periodisch zuführbar ist,
**dadurch gekennzeichnet, dass** eine Steuerungseinrichtung (6) dazu ausgebildet ist, einen von der Teilchenquelle (2) emittierten Teilchenstrom innerhalb einer HF-Pulsdauer ($\Delta t$) des Hochfrequenzpulses derart zu variieren, dass der innerhalb der HF-Pulsdauer ($\Delta t$) geformte Puls geladener Teilchen zumindest zwei Teilpulse mit unterschiedlichen mittleren Energien pro Teilchen aufweist.

10. Einrichtung (100) der materialdiskriminierenden Radioskopie, mit einem Röntgenstrahlemitter (60), einem Röntgenstrahldetektor (80) und einer Auswerteeinrichtung (81) zur Erzeugung von radioskopischen Bildern aus den mittels des Röntgendetektors (80) erfassten Daten, wobei ein zu durchleuchtendes Objekt (110) in einen Zwischenbereich zwischen Röntgenemitter (60) und Röntgendetektor (80) einzubringen ist,
**dadurch gekennzeichnet, dass** der Röntgenemitter (60) einen Linearbeschleuniger (1) gemäß Patentanspruch 9 aufweist, welcher dazu ausgebildet ist, ein Target (61) mit Pulsen geladener Teilchen zu beaufschlagen.

## FIG 1

FIG 2

EP 3 321 716 A1

## FIG 3

## FIG 4

**Europäisches Patentamt**
**European Patent Office**
**Office européen des brevets**

# EUROPÄISCHER RECHERCHENBERICHT

Nummer der Anmeldung

EP 17 19 4212

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2015/175751 A1 (AMERICAN SCIENCE & ENG INC [US]) 19. November 2015 (2015-11-19) * Abbildungen 1,2,4-6 * * Absatz [0002] - Absatz [0063] * ----- | 1-10 | INV. G01V5/00 H05H9/04 |
| A,D | US 2014/270086 A1 (KRASNYKH ANATOLY [US]) 18. September 2014 (2014-09-18) * Abbildungen 1-10 * * Absatz [0033] - Absatz [0053] * ----- | 1-10 | |
| A | DE 10 2011 075210 A1 (SIEMENS AG [DE]) 8. November 2012 (2012-11-08) * Abbildung 1 * * Absatz [0029] - Absatz [0031] * ----- | 1-10 | |
| A | US 2012/093289 A1 (ARODZERO ANATOLI [US] ET AL) 19. April 2012 (2012-04-19) * Abbildungen 1a-13 * * Absatz [0045] - Absatz [0079] * ----- | 1-10 | |
| A | DE 10 2010 032214 A1 (SIEMENS AG [DE]) 26. Januar 2012 (2012-01-26) * Abbildungen 1-3c * * Absatz [0001] - Absatz [0036] * ----- | 1-10 | RECHERCHIERTE SACHGEBIETE (IPC) G01V H05H |

Der vorliegende Recherchenbericht wurde für alle Patentansprüche erstellt

| Recherchenort | Abschlußdatum der Recherche | Prüfer |
|---|---|---|
| Den Haag | 23. Februar 2018 | Clemente, Gianluigi |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 19 4212

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-02-2018

| Im Recherchenbericht angeführtes Patentdokument | Datum der Veröffentlichung | Mitglied(er) der Patentfamilie | Datum der Veröffentlichung |
|---|---|---|---|
| WO 2015175751 A1 | 19-11-2015 | US 2017055338 A1<br>WO 2015175751 A1 | 23-02-2017<br>19-11-2015 |
| US 2014270086 A1 | 18-09-2014 | KEINE | |
| DE 102011075210 A1 | 08-11-2012 | CN 102769990 A<br>DE 102011075210 A1<br>US 2012280640 A1 | 07-11-2012<br>08-11-2012<br>08-11-2012 |
| US 2012093289 A1 | 19-04-2012 | US 2012093289 A1<br>WO 2012054381 A1 | 19-04-2012<br>26-04-2012 |
| DE 102010032214 A1 | 26-01-2012 | DE 102010032214 A1<br>WO 2012013370 A1 | 26-01-2012<br>02-02-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8183801 B2
- US 5524133 A
- US 20140270086 A1

**In der Beschreibung aufgeführte Nicht-Patentliteratur**

- **S. OGORODNIKOV ; V. PETRUNIN.** *Physical Review Special Topics - Accelerators and Beams,* 2002, vol. 5, 104701